# EUROPEAN PATENT APPLICATION

(11) **EP 3 916 842 A1**
(43) Date of publication of application: **01.12.2021**
(21) Application number: 20177529.3
(22) Date of filing: 29.05.2020
(51) Int. Cl.: H01M 4/04, H01M 4/136, H01M 4/62, H01M 10/0525

(54) **ELECTRODE BINDER COMPOSITION FOR LITHIUM ION ELECTRICAL STORAGE DEVICES**

(71) Applicant: ARKEMA INC., King of Prussia PA 19406 (US)
(72) Inventor: CHENG, Dong, Changshu, Jiangsu 215522 (CN)
(74) Representative: Arkema Patent

(57) **Abstract**

The present invention relates generally to the field of electrical energy storage in the lithium storage batteries of Li-ion type. More specifically, the invention relates to a binder for Li-ion battery positive electrode, to a method of preparation of said electrode and to its use in a Li-ion battery. Another subject matter of the invention is the Li-ion batteries manufactured by incorporating this electrode material.

## Description

### FIELD OF THE INVENTION

The present invention relates generally to the field of electrical energy storage in the lithium storage batteries of Li-ion type. More specifically, the invention relates to a binder for Li-ion battery positive electrode, to a method of preparation of said electrode and to its use in a Li-ion battery. Another subject matter of the invention is the Li-ion batteries manufactured by incorporating this electrode material.

### TECHNICAL BACKGROUND

An elementary cell of a Li-ion storage battery or lithium battery comprises an anode (at discharge), generally made of lithium metal or based on carbon, and a cathode (likewise at discharge), generally made of a lithium insertion compound of metal oxide type, between which is inserted an electrolyte which conducts lithium ions.

A cathode or an anode generally comprises at least one current collector on which is deposited a composite material which consists of: one or more "active" materials, active because they exhibit an electrochemical activity with respect to lithium, one or more polymers which act as binder and which are generally functionalized or nonfunctionalized fluoropolymers, such as polyvinylidene fluoride (PVDF), or aqueous-based polymers of carboxymethylcellulose type or styrene/butadiene latexes, plus one or more electron-conducting additives which are generally allotropic forms of carbon.

The conventional active materials at the negative electrode are generally lithium metal, graphite, silicon/carbon composites, silicon, fluorographites of CFₓ type with x between 0 and 1, and titanates of LiTi₅O₁₂ type.

The conventional active materials at the positive electrode are generally of the LiMO₂ type, of the LiMPO₄ type, of the Li₂MPO₃F type, of the Li₂MSiO₄ type, where M is Co, Ni, Mn, Fe or a combination of these, of the LiMn₂O₄ type or of the S₈ type.

Among these materials, lithium iron phosphate (LiFePO₄ or LFP), having an olivine structure, has attracted attention as a potential cathode material for Li-ion battery due to a high theoretical capacity (170 mA h g⁻¹), high safety and economic benefits. However, LiFePO₄ has poor electrical conductivity and a low lithium ion diffusion coefficient. To address these problems, several approaches such as morphology control, surface coating of an additional layer, and use of conductive additives have been proposed.

Nano-sizing is a way to improve LFP cathode rate performance by reducing the transfer length of Lithium ion. Binders with higher binding force are needed in order to maintain the binding level of cathode to an aluminium foil, since nano-sized LFP has much higher surface area. Moreover, the slurry viscosity of nano-sized LFP is very high and could easily physically gelled or viscosity build-up during storing.

Document US 2017/373319 describes a conductive paste for positive electrodes of LiB that is inhibited from increasing in viscosity and gelling, and has an easy-to-apply viscosity. The conductive paste contains: a dispersion resin (A) including polycyclic aromatic hydrocarbon group-containing resins (A1) and polyvinyl alcohol resins (A2), polyvinylidene fluoride (B), conductive carbon (C), and a solvent (D) with a dehydrating agent (E). This combination of components (A) to (D) with a dehydrating agent (E) presumably inhibits polymerization of polyvinylidene fluoride molecules, which inhibits viscosity increase and gelation of the conductive paste or mixture paste for positive electrodes of lithium-ion batteries.

There is a need for a cathode binder formulation making it possible to produce positive electrodes with balanced binding force and cathode slurry stability, and which can be easily processed.

It was found that combining a specific range of functionality for the fluorinated binder, with a specific viscosity of the binder formulation, improves the binding force compared to non-functionalized binders, and also maintains good slurry processability in nano-sized phospho-olivine based cathode formulations.

### SUMMARY OF THE INVENTION

It is a first object of the invention to provide a binder for a nano-sized phospho-olivine based cathode consisting of a fluoropolymer composition, wherein said composition comprises at least one thermoplastic fluoropolymer comprising at least one functional monomer and has a solution viscosity in NMP with 5wt% solid content between 0.3 Pa.s and 1 Pa.s at 10 s⁻¹, tested by Brookfield viscometer at room temperature (25°C).

It is another object of the invention to provide a Li-ion battery positive electrode material comprising at least one electron-conducting additive, a nano-sized phospho-olivine as electrode active material capable of reversibly forming an insertion compound with lithium, and a polymer binder, wherein said binder consists of the fluoropolymer composition according to the invention.

Another object of the present invention is a process for the preparation of the electrode composite material described above, which comprises:
i) preparation of a slurry by mixing in a solvent or a mixture of solvents, the constituents listed below:
   - an electron-conducting additive;
   - a polymer binder according to the invention;
   - a nano-sized phospho-olivine as electrode active material,
ii) preparation of a film starting from the slurry prepared in (i),
iii) coating said film onto a current collector and evaporating the solvent.

In addition, a subject matter of the present invention is Li-ion batteries incorporating said material.

The present invention enables to meet the abovementioned need. In particular, the invention provides a binder formulation with improved binding force able to maintain good slurry processability in nano-sized phospho-olivine based cathodes.

### DESCRIPTION OF EMBODIMENTS

The invention will now be described in more detail without limitation in the following description. Unless otherwise mentioned, the percentages in the present application are percentages by weight.

According to a first aspect, the invention concerns a binder for a nano-sized lithium phospho-olivine based cathode consisting of a fluoropolymer composition, wherein said composition comprises at least one thermoplastic fluoropolymer comprising at least one functional monomer and has a solution viscosity, in NMP with 5 wt% solid content, between 0.3 Pa.s and 1 Pa.s at 10 s⁻¹, tested by Brookfield viscometer at room temperature.

The fluoropolymer comprises a fluorinated vinylic monomer selected from the group comprising: vinylidene fluoride (VDF), tetrafluoroethylene (TFE), trifluoroethylene (TrFE), chlorotrifluoroethylene (CTFE), hexafluoropropene (HFP), vinyl fluoride (VF), hexafluoroisobutylene (HFIB), perfluorobutylethylene (PFBE), pentafluoropropene, 3,3,3-trifluoro-1-propene, 2-trifluoromethyl-3,3,3-trifluoropropene, 2,3,3,3-tetrafluoropropene, fluorinated vinyl ethers including perfluoromethyl ether (PMVE), perfluoroethylvinyl ether (PEVE), perfluoropropylvinyl ether (PPVE), perfluorobutylvinyl ether (PBVE), longer alkyl chain perfluorinated vinyl ethers, fluorinated dioxoles, partially- or per-fluorinated alpha olefins of C4 and higher, partially- or per-fluorinated cyclic alkenes of C3 and higher, and combinations thereof.

According to one embodiment, the fluoropolymers are chosen from vinylidene fluoride copolymers, and poly(vinylidene fluoride).

The term "PVDF" employed here comprises vinylidene fluoride (VDF) homopolymers or copolymers of VDF and of at least one other comonomer in which the VDF represents at least 50 mol%. The comonomers which can be polymerized with VDF are chosen from vinyl fluoride, trifluoroethylene, chlorotrifluoroethylene (CTFE), 1,2-difluoroethylene, tetrafluoroethylene (TFE), hexafluoropropylene (HFP), perfluoro(alkyl vinyl) ethers, such as perfluoro(methyl vinyl) ether (PMVE), perfluoro(ethyl vinyl) ether (PEVE) or perfluoro(propyl vinyl) ether (PPVE), perfluoro(1,3-dioxole), perfluoro(2,2-dimethyl-1,3-dioxole) (PDD), the product of formula CF₂=CFOCF₂CF(CF₃)OCF₂CF₂X in which X is SO₂F, CO₂H, CH₂OH, CH₂OCN or CH₂OPO₃H, the product of formula CF₂=CFOCF₂CF₂SO₂F, the product of formula F(CF₂)ₙCH₂OCF=CF₂ in which n is 1, 2, 3, 4 or 5, the product of formula R₁CH₂OCF=CF₂ in which R₁ is hydrogen or F(CF₂)_{z} and z has the value 1, 2, 3 or 4, the product of formula R₃OCF=CH₂ in which R₃ is F(CF₂)_{z} and z has the value 1, 2, 3 or 4, or also perfluorobutylethylene (PFBE), fluorinated ethylene propylene (FEP), 3,3,3-trifluoropropene, 2-trifluoromethyl-3,3,3-trifluoro-1-propene, 2,3,3,3-tetrafluoropropene or HFO-1234yf, E-1,3,3,3-tetrafluoropropene or HFO-1234zeE, Z-1,3,3,3-tetrafluoropropene or HFO-1234zeZ, 1,1,2,3-tetrafluoropropene or HFO-1234yc, 1,2,3,3-tetrafluoropropene or HFO-1234ye, 1,1,3,3-tetrafluoropropene or HFO-1234zc, and chlorotetrafluoropropene or HCFO-1224.

The fluoropolymer composition comprises at least one thermoplastic fluoropolymer comprising a fluorinated vinylic monomer and at least another comonomer with functionality chosen from carboxyl, epoxy, carbonyl or hydroxyl. According to one embodiment, said fluoropolymer comprises units carrying at least one of the following functional groups: carboxylic acid, carboxylic acid anhydride, carboxylic acid esters, epoxy groups (such as glycidyl), amide groups, alcohol groups, carbonyl groups, mercapto groups, sulfide, oxazoline groups and phenol groups.

The functional group is introduced onto the fluoropolymer by a chemical reaction which can be grafting or a copolymerization of the fluoropolymer with a compound carrying at least one of said functional groups, according to techniques well known to a person skilled in the art.

According to one embodiment, the functional group is an end-of-chain functionality, which means it is located at the end of the fluoropolymer chain.

According to one embodiment, the monomer with functional group is intercalated into the fluoropolymer chain.

According to one embodiment, the carboxylic acid functional group is a hydrophilic group of (meth)acrylic acid type chosen from acrylic acid, methacrylic acid, hydroxyethyl (meth)acrylate, hydroxypropyl (meth)acrylate and hydroxyethylhexyl (meth)acrylate.

According to one embodiment, the fluoropolymer composition excludes acrylic copolymers such as copolymers of methyl methacrylate and methacrylic acid.

According to one embodiment, the units carrying the carboxylic acid functional group additionally comprise a heteroatom chosen from oxygen, sulphur, nitrogen and phosphorus.

When the fluoropolymer is functionalized, the content of functional groups is at least 0.01 weight % and less or equal than 0.2 weight %, based on the weight of the fluoropolymer composition.

According to one embodiment, the fluoropolymer composition is a blend consisting of a high molecular weight fluoropolymer and a functionalized high molecular weight fluoropolymer.

The term "high molecular weight fluoropolymer" means a fluoropolymer having a melt viscosity of greater than or equal to 2300 Pa.s at 232°C under shearing of 100 s⁻¹. The viscosity is measured at 232°C, at a shear gradient of 100 s⁻¹, using a capillary rheometer or a parallel-plate rheometer, according to the standard ASTM D3825. The two methods give similar results.

According to one embodiment, the fluoropolymer composition consists of a functionalized high molecular weight fluoropolymer.

The PVDF used in the invention is generally prepared by means known in the art, using aqueous free-radical emulsion polymerization - although suspension, solution and supercritical CO₂ polymerization processes may also be used. In an emulsion polymerization process, a reactor is charged with deionized water, water-soluble surfactant capable of emulsifying the reactant mass during polymerization and optional paraffin wax antifoulant. The mixture is stirred and deoxygenated. A predetermined amount of chain transfer agent, CTA, is then introduced into the reactor, the reactor temperature raised to the desired level and vinylidene fluoride (and possibly one or more comonomers) are fed into the reactor. Once the initial charge of vinylidene fluoride is introduced and the pressure in the reactor has reached the desired level, an initiator emulsion or solution is introduced to start the polymerization reaction. The temperature of the reaction can vary depending on the characteristics of the initiator used and one of skill in the art will know how to do so. Typically the temperature will be from about 30° to 150°C, preferably from about 60° to 120°C. Once the desired amount of polymer has been reached in the reactor, the monomer feed will be stopped, but initiator feed is optionally continued to consume residual monomer. Residual gases (containing unreacted monomers) are vented and the latex recovered from the reactor.

The surfactant used in the polymerization can be any surfactant known in the art to be useful in PVDF emulsion polymerization, including perfluorinated, partially fluorinated, and non-fluorinated surfactants. Preferably, the PVDF emulsion of the invention is fluorosurfactant free, with no flurosurfactants being used in any part of the polymerization. Non-fluorinated surfactants useful in the PVDF polymerization could be both ionic and non-ionic in nature including, but are not limited to, 3-allyloxy-2-hydroxy-1-propane sulfonic acid salt, polyvinylphosphonic acid, polyacrylic acids, polyvinyl sulfonic acid, and salts thereof, polyethylene glycol and/or polypropylene glycol and the block copolymers thereof, alkyl phosphonates and siloxane-based surfactants.

The PVDF polymerization results in a latex generally having a solids level of 10 to 60 percent by weight, preferably 10 to 50 percent, and having a latex weight average particle size of less than 500 nm, preferably less than 400 nm, and more preferably less than 350 nm. The weight average particle size is generally at least 20 nm and preferably at least 50 nm. Additional adhesion promoters may also be added to improve the binding characteristics and provide connectivity that is non-reversible.

The PVDF latex may be used in the invention as a latex binder, or it may be dried to a powder by means known in the art, such as, but not limited to, spray drying, freezedrying, coagulating, and drum drying. The dried PVDF powder has an average particle size of from 0.5 to 200 microns, preferably from 1 to 100 microns, more preferably from 2 to 50 microns, and most preferably from 3 to 20 microns. The PVDF powder can be used after dispersion in water or dissolved in a solvent.

The functionalized fluorinated polymer may be prepared in an aqueous reaction medium, by a process comprising:
a) forming an aqueous emulsion comprising at least one initiator, a stabilizer, at least one fluorinated vinylic monomer, and a hydrophilic monomer, as defined above,
b) initiating copolymerization of said at least one fluorinated vinylic monomer with said hydrophilic monomer with stirring, under heat and super-atmospheric pressure.

A polymerization reaction in accordance with the present invention may be carried out by charging a reactor with water (preferably deionized water), at least one fluorinated vinylic monomer, at least one hydrophilic monomer as defined above and optionally, one or more of a surfactant, a chain-transfer agent and/or an antifoulant. Air may be purged from the reactor prior to the introduction of the monomers. Water is added to the reactor before bringing the reactor to the desired starting temperature, but the other materials may be added before or after bringing the reactor to temperature. At least one radical initiator is added to start and maintain the polymerization reaction. Additional monomer may be optionally added to replenish monomer that is consumed, and the other materials may be optionally added during the course of the polymerization to maintain the reaction and control the final product properties.

It is another object of the invention to provide a Li-ion battery positive electrode material comprising at least one electron-conducting additive, a nano-sized phospho-olivine as electrode active material capable of reversibly forming an insertion compound with lithium, and a polymer binder, wherein said binder consists of the fluoropolymer composition described above.

The term "phosho-olivine" based active materials includes lithium iron phosphate LiFePO₄ (LFP) and lithium-iron-manganese phosphate LiMnₓFe₁₋ₓPO₄ (LMFP), 0<x<1.

According to embodiment, the phospho-olivine based cathode materiel consists of lithium iron phosphate.

According to one embodiment, the phospho-olivine based cathode materiel consists of lithium-iron-manganese phosphate LiMnₓFe₁₋ₓPO₄ (LMFP).

According to one embodiment, the phospho-olivine based cathode materiel consists of a blend of LiFePO₄ and LiMnₓFe₁₋ₓPO₄, the blend ratio varying from 0% to 100% by weight of each component.

In a preferred embodiment, the positive electrode materiel has a formulation comprising:
a) said least one electron-conducting additive at a content ranging from 0.5 to 5% by weight, preferably from 0.6 to 4% by weight, with respect to the total weight of the cathode formulation;
b) said nano-sized phospho-olivine as electrode active material at a content ranging from 90 to 99% by weight, with respect to the total weight of the cathode formulation;
c) said polymer binder at a content ranging from 0.5 to 5% by weight, with respect to the total weight of the cathode formulation,
the sum of all percentages adding up to 100%.

The electron-conducting additive is preferably chosen from the different allotropic forms of carbon or conducting organic polymers.

The nano-sized phospho-olivine has a BET Specific Surface Area (SSA) higher than 15 m²/g.

Another object of the present invention is a process for the preparation of the electrode composite material described above, which comprises:
i) preparation of a slurry by mixing in a solvent or a mixture of solvents, the constituents listed below:
   - at least one electron-conducting additive;
   - a polymer binder according to the invention;
   - a nano-sized phospho-olivine as electrode active material, to obtain a slurry with a solid content of 40 to 80% by weight,
ii) preparation of a film starting from the slurry prepared in (i),
iii) coating said film onto a current collector and evaporating the solvent.

The slurry can be obtained by dispersion and homogenization by any mechanical means, for example using a rotor-stator or an anchor stirrer or by ultrasound.

Preferably, the solvent is an organic solvent, such as N-Methyl pyrrolidone (NMP), cyclopentanone, dimethylformamide (DMF), dimethylsulfoxide (DMSO), dimethylacetamide (DMAc), or combinations thereof.

The suspension can be prepared in a single stage or in two or three successive stages. When the suspension is prepared in two successive stages, one embodiment consists in preparing, in the first stage, a dispersion containing the solvent, and optionally all or part of the polymer binder, using mechanical means, and then, in a second stage, in adding the other constituents of the composite material to this first dispersion. The film is subsequently obtained from the suspension on conclusion of the second stage.

The metal support of the cathode (current collector) is generally made of aluminium. The evaporation of solvent is generally performed by heating at a temperature between 30 and 150°C.

In addition, a subject matter of the present invention is Li-ion batteries incorporating said material.

### Examples

### Examples 1-10: Process for the manufacture of a cathode and compositions of a cathode

The electrode was prepared by mixing the nano-LFP, binder and conductive agent (CA) with a solvent (N-methyl pyrrolidone, NMP), the solid content of this slurry varying from 40% to 60%. Formulation of the blends is LFP/binder/CA = 90-99/0.5-5/0.5-5.

Different functional binders were tested.

Binding force (peel value), slurry flowability at low shear (represent free flowability) and moderate shear (represent flowability under force like casting or pumping) results were used for evaluation.

The binding force was measured via a 180° peel test using ASTM D903 on INSTRON 5966 tensile machine at a speed of 50 mm/min. The slurry was tested using Anton Paar MCR302 under frequency sweep mode with following settings: 25°C, 0.1-100Hz, 0.1% strain and 120s soak time. Storage modulus (G') and loss modulus (G") allow calculating the dissipation factor tan δ with formula: tan δ = G"/G'.

The following fluorinated binders have been used:
- FP1: PVDF homopolymer, with a melt viscosity of greater than 4000 Pa.s at 232°C and 100 s⁻¹
- FP2: PVDF homopolymer functionalized with a carboxylic acid, with a melt viscosity of 8500 Pa.s at 232°C and 100 s⁻¹
- FP3: Copolymer of VDF and HFP, with a melt viscosity of 3300 Pa.s at 232°C and 100 s⁻¹
- FP4: PVDF homopolymer functionalized with a carboxylic acid, with a melt viscosity of 7000 Pa.s at 232°C and 100 s⁻¹
- FP5: PVDF homopolymer functionalized with a carboxylic acid, with a melt viscosity of 6900 Pa.s at 232°C and 100 s⁻¹
- Solef® 5130: Functionalized PVDF sold by Solvay, with a melt viscosity of greater than 2700 Pa.s at 232°C and 100 s⁻¹.

The results are shown in Table 1 below.

This data shows that binders comprising fluoropolymers with functionality are able to improve the binding force and maintain the slurry flowability in nano-LFP cathodes.

**Table 1**

| Binder # | Functionality ratio % | Resting time | Complex viscos increase % ^{b} | Peel ^{c} | | |
|---|---|---|---|---|---|---|
| | | h | tanδ@10Hz | r.t.2Hz | | N/m |
| #1 (FP1/FP2 90/10) | 0.05 | 0 | 1.92 | 46 | | 40 |
| | | 24 | 1.48 | | | |
| #2 FP5 | 0.056 | 0 | 2.72 | 47 | | 35 |
| | | 24 | 1.61 | | | |
| #3 (FP1/FP2 80/20) | 0.1 | 0 | 2.01 | 106 | | 33 |
| | | 24 | 1.19 | | | |
| #4 (FP1/S5130 90/10) | 0.14 | 0 | 1.62 | 71 | | 46 |
| | | 24 | 1.05 | | | |
| | | 24 | 1.32 | | | |
| #5 (FP1/FP2 60/40) | 0.20 | 0 | 1.27 | 62 | | 32 |
| | | 24 | 1.37 | | | |
| #6 (FP2-0.25) | 0.25 | 0 | 1.11 | 150 | | 42 |
| | | 24 | 0.72 | | | |
| #7 (FP3/FP2 20/80) | 0.4 | 0 | 1.30 | 210 | | 21 |
| | | 24 | 0.73 | | | |
| #8 (FP2) | 0.50 | 0 | 1.12 | 302 | | 33 |
| | | 24 | 0.67 | | | |
| #9 (FP4) | 1.00 | 0 | 2.75 | 207 | | 40 |
| | | 24 | 0.90 | | | |

| | | | | | | |
|---|---|---|---|---|---|---|
| a. tanδ >1, liquid-like state; tanδ<1, solid-like state; b. increase ratio: <100% is good; 100%-150% is OK; >150% is bad; c. reference peel force is 30 N/m | | | | | | |

## Claims

1. A binder for a nano-sized lithium phospho-olivine based cathode consisting of a fluoropolymer composition, wherein said composition comprises at least one thermoplastic fluoropolymer comprising at least one functional monomer and has a solution viscosity, in NMP with 5 wt% solid content, between 0.3 Pa.s and 1 Pa.s at 10 s⁻¹, tested by Brookfield viscometer at room temperature.

2. The binder of claim 1 wherein said thermoplastic fluoropolymer comprises a fluorinated vinylic monomer and at least another comonomer with functionality chosen from carboxyl, epoxy, carbonyl or hydroxyl.

3. The binder of any of claim 1 or 2, wherein said fluoropolymer comprises a fluorinated vinylic monomer selected from the group comprising: vinylidene fluoride (VDF), tetrafluoroethylene (TFE), trifluoroethylene (TrFE), chlorotrifluoroethylene (CTFE), hexafluoropropene (HFP), vinyl fluoride (VF), hexafluoroisobutylene (HFIB), perfluorobutylethylene (PFBE), pentafluoropropene, 3,3,3-trifluoro-1-propene, 2-trifluoromethyl-3,3,3-trifluoropropene, 2,3,3,3-tetrafluoropropene, fluorinated vinyl ethers including perfluoromethyl ether (PMVE), perfluoroethylvinyl ether (PEVE), perfluoropropylvinyl ether (PPVE), perfluorobutylvinyl ether (PBVE), longer alkyl chain perfluorinated vinyl ethers, fluorinated dioxoles, partially- or perfluorinated alpha olefins of C4 and higher, partially- or per-fluorinated cyclic alkenes of C3 and higher, and combinations thereof.

4. The binder of any of claims 1 to 3, wherein said fluoropolymer is chosen among poly(vinylidene fluoride) homopolymer and copolymers of vinylidene fluoride and of at least one other comonomer in which the VDF represents at least 50 mol%, said comonomers being chosen from: vinyl fluoride, trifluoroethylene, chlorotrifluoroethylene (CTFE), 1,2-difluoroethylene, tetrafluoroethylene (TFE), hexafluoropropylene (HFP), perfluoro(alkyl vinyl) ethers, such as perfluoro(methyl vinyl) ether (PMVE), perfluoro(ethyl vinyl) ether (PEVE) or perfluoro(propyl vinyl) ether (PPVE), perfluoro(1,3-dioxole), perfluoro(2,2-dimethyl-1,3-dioxole) (PDD), the product of formula CF₂=CFOCF₂CF(CF₃)OCF₂CF₂X in which X is SO₂F, CO₂H, CH₂OH, CH₂OCN or CH₂OPO₃H, the product of formula CF₂=CFOCF₂CF₂SO₂F, the product of formula F(CF₂)ₙCH₂OCF=CF₂ in which n is 1, 2, 3, 4 or 5, the product of formula R1CH₂OCF=CF₂ in which R1 is hydrogen or F(CF₂)_{z} and z has the value 1, 2, 3 or 4, the product of formula R3OCF=CH₂ in which R3 is F(CF₂)_{z} and z has the value 1, 2, 3 or 4, or also perfluorobutylethylene (PFBE), fluorinated ethylene propylene (FEP), 3,3,3-trifluoropropene, 2-trifluoromethyl-3,3,3-trifluoro-1-propene, 2,3,3,3-tetrafluoropropene or HFO-1234yf, E-1,3,3,3-tetrafluoropropene or HFO-1234zeE, Z-1,3,3,3-tetrafluoropropene or HFO-1234zeZ, 1,1,2,3-tetrafluoropropene or HFO-1234yc, 1,2,3,3-tetrafluoropropene or HFO-1234ye, 1,1,3,3-tetrafluoropropene or HFO-1234zc, and chlorotetrafluoropropene or HCFO-1224.

5. The binder of any of claims 1 to 4, wherein the fraction of functional groups in the functionalized fluoropolymer is at least 0.01 weight % and less or equal than 0.2 weight %, based on the weight of the fluoropolymer composition.

6. A Li-ion battery positive electrode material comprising at least one electron-conducting additive, a nano-sized lithium iron phosphate as electrode active material capable of reversibly forming an insertion compound with lithium, and a polymer binder, wherein said binder consists of the fluoropolymer composition according to any of claims 1 to 5.

7. A Li-ion battery positive electrode material comprising at least one electron-conducting additive, a nano-sized lithium-iron-manganese phosphate LiMnₓFe₁₋ₓPO₄ with 0<x<1, as electrode active material capable of reversibly forming an insertion compound with lithium, and a polymer binder, wherein said binder consists of the fluoropolymer composition according to any of claims 1 to 5.

8. A Li-ion battery positive electrode material comprising at least one electron-conducting additive, a blend of nano-sized lithium iron phosphate and lithium-iron-manganese phosphate as electrode active material capable of reversibly forming an insertion compound with lithium, and a polymer binder, wherein said binder consists of the fluoropolymer composition according to any of claims 1 to 5.

9. The Li-ion positive electrode materiel according to one of claims 6 to 8, wherein said material has a formulation comprising:
a) said least one electron-conducting additive at a content ranging from 0.5 to 5% by weight, with respect to the total weight of the cathode formulation;
b) said nano-sized lithium phospho-olivine as electrode active material at a content ranging from 90 to 99% by weight, with respect to the total weight of the cathode formulation;
c) said polymer binder at a content ranging from 0.5 to 5% by weight, with respect to the total weight of the cathode formulation,
the sum of all percentages adding up to 100%.

10. The Li-ion battery positive electrode material according to any of claims 6 to 9, wherein the electron-conducting additive is chosen from the different allotropic forms of carbon or conducting organic polymers.

11. A process for the preparation of the electrode material as claimed in any one of claims 6 to 10, comprising:
i) mixing the constituents listed below in a solvent or a mixture of solvents:
- an electron-conducting additive;
- a polymer binder according;
- a nano-sized lithium phospho-olivine as electrode active material,
to obtain a slurry with a solid content of 40 to 60% by weight,
ii) preparation of a film starting from the slurry prepared in (i),
iii) coating said film onto a current collector and evaporating the solvent.

12. The process as claimed in claim 11, **characterized in that** the solvent is an organic solvent.

13. The process as claimed in claim 11, **characterized in that** the organic solvent is chosen among N-Methyl pyrrolidone, cyclopentanone, dimethylformamide, dimethylsulfoxide, dimethylacetamide, and combinations thereof.

14. A Li-ion battery, comprising the positive electrode material as claimed in any one of claims 6 to 10.
